# EUROPÄISCHE PATENTSCHRIFT

(11) **EP 4 573 887 B1**
(45) Veröffentlichungstag und Bekanntmachung des Hinweises auf die Patenterteilung: **25.03.2026**
(21) Anmeldenummer: 24219724.2
(22) Anmeldetag: 13.12.2024
(51) Int. Cl.: A01G 13/10, A01G 13/28, B27J 1/02, B27M 3/00, B27D 1/10

(54) **FLÄCHENELEMENT**
SURFACE ELEMENT
ÉLÉMENT DE SURFACE

(30) Priorität: 19.12.2023 DE 102023135873
(43) Veröffentlichungstag der Anmeldung: 25.06.2025
(73) Patentinhaber: MeisterWerke Schulte GmbH, 59602 Rüthen-Meiste (DE)
(72) Erfinder: Schulte, Guido, 59602 Rüthen (DE)
(74) Vertreter: Ksoll, Peter

(56) Entgegenhaltungen:
- CN-A- 106 926 330
- DE-A1- 102022 116 559
- JP-A- S 557 408
- US-A- 1 744 203
- US-A- 4 269 883

## Beschreibung

Die Erfindung betrifft ein Flächenelement gemäß den Merkmalen im Oberbegriff von Anspruch 1.

Bei dem aus der DE 101 64 037 C1 bekannten Naturfurnier können zwei Furnierblätter miteinander verbunden werden, wozu im Bereich der Längsseiten der Furnierblätter auf die Rückseite ein Kleber aufgetragen ist und sich ein Doppelfaden meanderförmig von Längsseite zu Längsseite erstreckt über den die Furnierblätter miteinander verbunden sind.

Aus der DE 77 19 222 U geht ein Profilstab, Profilleiste oder Profilbrett aus Holz oder Holzersatzstoffen hervor. Diese sind mindestens teilweise mit einer auf eine flexible Trägerfolie aufkaschierten Furnierschicht versehen. Die Trägerfolie kann aus einem Gestrick, Gewirk oder Gewebe aus Textilfäden bestehen.

Durch DE 1 923 655 A zählt eine selbstklebende Wandverkleidung zum Stand der Technik. Diese besteht aus parallel nebeneinander angeordneten bastartig zusammengefalteten Papierstreifen, die durch in Abständen voneinander verlaufenden Nähte miteinander verbunden sind. Auf die zusammengenähten Papierstreifen ist eine beidseitig mit einem selbstklebenden Stoff beschichtete Bahn geklebt.

Weiterhin geht aus der DE 20 11 807 A eine Schichtstoff-Verstärkungsware hervor. Diese ist aus parallelen Garnen aufgebaut, wobei die Garne miteinander durch Wirkmaschen verbunden sind, welche nicht die Garne durchstechen.

Ein Verfahren zur Verbindung von Rohfurnierstücken durch Fäden offenbart die JP S 55 7408 A. Hierbei werden Rohfurnierstücke zugeschnitten und aneinandergesetzt. Danach werden mehrere diagonale Nuten in die Oberfläche der Rohfurnierstücke geschnitten. In die Nuten werden Fäden eingelegt und mittels Klebstoff befestigt, so dass die Fäden mit den Rohfurnierstreifen und die Rohfurnierstreifen untereinander verbunden sind.

Flächenelemente sind in unterschiedlichsten Ausführungsformen und für verschiedenartige Anwendungszwecke bekannt, beispielsweise in Form von Gitterelementen als Spalier, Kletterhilfe oder Rankgerüst für Nutzpflanzen oder auch als Scheren- oder Faltzaun. Hierbei handelt es sich auf den jeweiligen Anwendungs- bzw. Einsatzfall angepasste feste oder flexible gitterartige Konstruktionen aus Holzlatten bzw. Holzstreifen, wobei zwei Holzstreifen in einem Kreuzungsbereich fest oder gelenkig miteinander verbunden sind.

Auch als Wuchshülle bzw. Verbissschutzvorrichtung kommen Flächenelemente in Form von Gitterelementen zum Einsatz. Solche Wuchshüllen bzw. Verbissschutzvorrichtungen dienen dazu, Setzlinge junger Pflanzen, insbesondere junger Bäume, im Wachstum zu unterstützen und vor Verbiss- und Fegeschäden durch Wild und anderen Tieren zu schützen.

Flächenelemente, beispielsweise Gitterelemente, Rankhilfen, hölzerne Schutzkonstruktionen sowie Wuchshüllen sollen bei der Anwendung im Freien, insbesondere in Wäldern, idealerweise in der Natur verbleiben, so dass sie nicht zurückgebaut werden müssen. Dazu ist es aber zwingend notwendig, dass sie sich nach dem ursprünglichen Anwendungszweck ohne schädliche Auswirkungen auf die Umwelt oder ohne Bildung von Mikroplastik zersetzen.

Bei Flächenelementen aus sich kreuzenden Holzstreifen können hierbei insbesondere die Art und Ausführung der Verbindung der Holzstreifen in den Kreuzungsbereichen eine Rolle spielen. Insbesondere wenn Verbindungsmittel aus nicht oder schwer verrottbaren Werkstoffen eingesetzt werden oder die Fügung zwischen den Holzstreifen durch eine Leimverbindung hergestellt ist, ist eine rückstandsfreie biologische Verrottung langwieriger oder je nach Produkten problematisch und praktisch nicht gegeben.

Generell besteht bei Flächenelementen Bedarf diese umweltbewusster und ökologischer zu gestalten, um sowohl während deren Gebrauch als auch im Anschluss daran, insbesondere bei der Entsorgung oder einem Recycling, eine nachteilige Umweltbeeinflussung zu vermeiden.

Der Erfindung liegt daher ausgehend vom Stand der Technik die Aufgabe zugrunde, ein sowohl ökologisch als auch funktional verbessertes Flächenelement zu schaffen.

Die Lösung dieser Aufgabe besteht nach der Erfindung in einem Flächenelement gemäß Anspruch 1.

Vorteilhafte Ausgestaltungen und Weiterbildungen des erfindungsgemäßen Flächenelements sind Gegenstand der abhängigen Ansprüche.

Ausgestaltungen und Modifikationen von Merkmalen des erfindungsgemäßen Flächenelements, die einzeln oder in Kombination die Erfindung technisch vorteilhaft ausgestalten, ergeben sich auch aus der Beschreibung und den beigefügten Zeichnungen.

Das Flächenelement ist aus Holzstreifen gebildet. Die Holzstreifen sind miteinander verbunden. Erfindungsgemäß ist die Fügung durch eine Nähverbindung realisiert, bei der die Holzstreifen durch zumindest einen Faden verbunden sind, der durch die Holzstreifen gestochen ist. Die Holzstreifen sind mit Hilfe von Nadel und Faden miteinander verbunden. Mittels einer Nadel, insbesondere mit Hilfe einer Nähmaschine, wird ein Durchgangsloch quer durch die Holzstreifen gestochen und ein Faden eingezogen.

Insbesondere ist ein Flächenelement aus sich kreuzenden Holzstreifen gebildet. Hierbei können die Holzstreifen sich rechtwinklig oder in einem Winkel relativ zueinander kreuzen, insbesondere kreuzen sich die Holzstreifen X-förmig. In Kreuzungsbereichen liegen jeweils zwei Holzstreifen auf- bzw. aneinander.

Es können auch mehr als zwei Holzstreifen miteinander vernäht sein. Hierbei können zumindest zwei Holzstreifen übereinander sich deckend angeordnet sein und zumindest ein weiterer Holzstreifen quer zu den beiden anderen Holzstreifen angeordnet sein. Der zumindest eine weitere Holzstreifen kreuzt die beiden anderen Holzstreifen.

In Kreuzungsbereichen können auch mehr als zwei Holzstreifen sich kreuzend übereinander angeordnet und miteinander vernäht sein.

Vorzugsweise wird die Nähverbindung mit Hilfe einer Nähnadel mit Rundspitze hergestellt. Der Durchmesser und die Geometrie der Nadelspitze ebenso wie der Durchmesser und die Qualität des eingesetzten Fadens erfolgt in Abstimmung auf die Holzart der verwendeten Holzstreifen und deren Dicke.

Zumindest ein Faden wird quer durch einen Holzstreifen gestochen. In einem Kreuzungsbereich liegen die beiden Holzstreifen aufeinander. Hier wird der Faden durch die Dicke der beiden aufeinanderliegenden Holzstreifen gestochen. Eine Nähnadel durchsticht die beiden Holzstreifen von oben. Hierbei wird ein Oberfaden durch die Holzstreifen geführt. Auf der Unterseite wird eine Schlinge gebildet. Diese Schlinge wird von der Greiferspitze erfasst und ein Unterfaden in die Schlinge eingefädelt. Beide Fäden werden nach oben gezogen und mit den Holzstreifen verschlungen. Ein Nähstich ist entstanden. Eine fortlaufende Vielzahl dieser Nähstiche bilden eine Naht.

Die Nähverbindung zwischen den Holzstreifen in Kreuzungsbereichen kann grundsätzlich mit einem Faden ausgeführt sein. Vorzugsweise wird eine Nähverbindung mit mehreren Fäden hergestellt, insbesondere mit einem Oberfaden und einem Unterfaden.

Der eine Faden oder die mehreren Fäden sind erfindungsgemäß mehrfach wiederholt durch die Holzstreifen geführt bzw. gestochen, wobei der Faden bzw. die Fäden mit sich und/oder den Holzstreifen verschlungen ist bzw. sind.

Eine vorteilhafte Ausführungsform sieht vor, dass eine aus dem einen Faden oder aus mehreren Fäden gebildete Naht sich über den Kreuzungsbereich erstreckt. Eine Nahtverbindung im Kreuzungsbereich von zwei Holzstreifen erhöht die Stabilität des Flächenelements.

Es können auch mehrere Nähte mit einem Abstand zueinander vorgesehen sein. Hierbei kann eine Naht in einem Kreuzungsbereich von zwei Holzstreifen quer über den Kreuzungsbereich geführt sein. Eine weitere Naht ist mit einem bezogen auf die Höhe eines Flächenelements vertikalen Abstand zur ersten Naht vorgesehen. Eine weiterhin vorteilhafte Ausgestaltung sieht vor, dass zwei Nähte mit einem Abstand zueinander angeordnet sind, wobei eine erste Naht im unteren Bereich einer Kreuzung und eine zweite Naht im oberen Bereich einer Kreuzung vorgesehen ist.

Ein Kreuzungsbereich ist der Bereich, in welchem sich zwei Holzstreifen kreuzen. Die Anordnung der Holzstreifen im Kreuzungsbereich ist im Wesentlichen X-förmig. Die sich an einen Kreuzungsmittelpunkt anschließenden Abschnitte eines Holzstreifens werden ebenfalls als Kreuzungsbereich angesehen. In einem Kreuzungsbereich kann eine Naht durch den doppellagigen Bereich der Kreuzung verlaufen, in welchem die beiden Holzstreifen vollständig aufeinanderliegen. Im Rahmen der Erfindung ist eine Naht im Kreuzungsbereich, auch eine solche Naht, die zunächst auf einer Breite eines Holzstreifens durch einen ersten Holzstreifen gestochen ist, woran sich ein doppellagiger Breitenabschnitt anschließt, in welchem die beiden Holzstreifen aufeinanderliegen, woran sich wiederum ein Breitenabschnitt des zweiten Holzstreifens anschließt, in welchem die Naht durch die Dicke des zweiten Holzstreifens gestochen ist.

Eine sich über einen Kreuzungsbereich erstreckende Naht verläuft vorzugsweise quer über die Breite eines Flächenelements. Hierbei erstreckt sich die Naht über weitere Holzstreifen und/oder weitere Kreuzungsbereich von zwei Holzstreifen.

Vorzugsweise ist durch den zumindest einen Faden ein Kettenstich gebildet. Ein Kettenstich wird fachterminologisch auch Kettstich genannt. Die Nadel sticht hierbei neben der Ausstichstelle ein und bildet so eine Schlinge. Diese wird um die neue Ausstichstelle gelegt. Der Faden wird mit sich selbst verkettet. Durch die Wiederholung der Arbeitsschritte entlang der Nahtlinie entsteht eine Schlingenkette. Von unten bzw. unterseitig zeigt sich der Kettenstich mit Schlaufen, die miteinander verbunden sind. Von oben bzw. oberseitig tritt der Kettenstich als gerade Naht in Erscheinung.

Besonders bevorzugt ist die Verbindung der Holzstreifen in den Kreuzungsbereichen durch zwei Fäden als zweifädiger Doppelkettenstich ausgeführt. Auf diese Weise wird eine elastische Naht gebildet, die sich nicht von selbst auflöst.

Bei einer vorzugsweisen Ausführungsform erstreckt sich eine aus dem zumindest einen Faden gebildete Schlingenkette über zumindest zwei Kreuzungsbereiche und einen Abstand zwischen den zwei Kreuzungsbereichen.

Wie bereits weiter oben ausgeführt, kann sich eine Schlingenkette über einen Kreuzungsbereich von zwei Holzstreifen erstrecken und verläuft quer über die Breite eines Flächenelements. Hierbei kann die Schlingenkette mit weiteren Holzstreifen alleine und/oder mit weiteren Holzstreifen in Kreuzungsbereichen vernäht sein.

Die Erfindung schafft ein vollständig natürlich und/oder biologisch abbaubares Flächenelement. Das erfindungsgemäße Flächenelement besteht vollständig aus natürlich und/oder biologisch abbaubaren Werkstoffen. Auf den Einsatz von umweltproblematischen Werkstoffen, sowohl hinsichtlich der Holzstreifen als auch der Fügung der Holzstreifenkreuzungsbereiche, wird vollständig verzichtet.

Die Herstellung des erfindungsgemäßen Flächenelements ist funktional und rational.

Erfindungsgemäße Flächenelemente lassen sich für unterschiedliche Anwendungszwecke einsetzen, beispielsweise als Absperrelemente, insbesondere temporäre Absperrelemente. Wegen ihrer Biokompatibilität sind die Flächenelemente besonders geeignet für die Forst- und Landwirtschaft ebenso wie im Naturschutz. Ameisenhügel und ähnliche biologisch schützenswerte Objekte können durch die Flächenelemente bzw. durch aus den Flächenelementen hergestellte Absperrungen geschützt werden. Auch als Wuchshülle bzw. Verbissschutzvorrichtungen können die Flächenelemente und insbesondere aus den Flächenelementen erzeugte hüllenartige Strukturen Anwendung finden.

Die Erfindung betrifft auch eine Pflanzenschutzvorrichtung gebildet aus zumindest einem erfindungsgemäßen Flächenelement oder aufweisend zumindest ein erfindungsgemäßes Flächenelement. Eine solche Pflanzenschutzvorrichtung kommt insbesondere als Wuchshülle und/oder Verbissschutz zu Einsatz. Insbesondere dient die Pflanzenschutzvorrichtung dazu, Setzlinge von jungen Pflanzen, insbesondere von jungen Bäumen, im Wachstum zu unterstützen und vor Verbiss- und Fegeschäden durch Wild und andere Tiere zu schützen.

Bevorzugt bestehen die Holzstreifen aus 0,5 mm bis 10 mm dickem Furnier aus Echtholz. Die Breite der Holzstreifen kann variieren in Abstimmung auf den jeweiligen Anwendungszweck.

Ein Holzstreifen kann auch aus mehreren Lagen von Holzlamellen gebildet sein, die aufeinander angeordnet sind. Die Holzstreifen sind mehrlagig, insbesondere mehrlagig aus Furnierstreifen gebildet.

Der Faden besteht aus einem biokompatiblen und/oder biologisch abbaubaren Werkstoff. Insbesondere besteht der Faden aus einem nachwachsenden Rohstoff, vorzugsweise aus Naturfasern. Hier bietet sich besonders der Einsatz von Fäden aus Pflanzenfasern wie Fäden aus Baumwolle an. Diese sind vollständig und rückstandslos abbaubar.

Für die Praxis weiterhin vorteilhaft wird ein Faden angesehen, der aus mehrfach verzwirnten Baumwollfäden gebildet ist. Ein solcher Faden kann beispielsweise 3fach oder 4fach verzwirnt sein.

Vorzugsweise werden Fäden eingesetzt aus gesponnenen Baumwolllangfasern, die lediglich insoweit behandelt worden sind, dass sie einer üblichen Garnvorbehandlungsmaßnahme unterzogen worden sind, wie beispielsweise einer Merzerisierung und/oder einer Waschung.

Das Gewicht eines Fadens kann variieren. Bewährt haben sich in Versuchen Baumwoll-Nähfäden mit einem Gewicht von größer 150 dtex bis 3.000 dtex.

Für besonders langlebige Anwendungen der Flächenelemente und/oder besonders feuchte Klimabedingungen eignen sich auch Fäden auf Basis natürlicher Steinwolle oder Basaltfäden.

Möglich ist es auch, dass der Faden aus Regeneratfasern besteht. Hierbei handelt es sich um regenerierte Fasern aus pflanzlichen oder tierischen Rohstoffen, die durch Umwandlung über gelöste Verbindungen in Fadenform regeneriert werden. Das bedeutet, das Garn aus den Regeneratfasern liegt in der gleichen chemischen Substanz wie der Ausgangsstoff vor. Im Rahmen der Erfindung kommen solche Garne aus Regeneratfasern zum Einsatz, die natürlich und biologisch abbaubar sind.

Eine den allgemeinen Einsatzzweck vorteilhaft ausgestaltende Ausführungsform, insbesondere, wenn die Flächenelemente als Verbissschutz bzw. Wuchs- oder Schutzhülle für Pflanzen zum Einsatz gelangen, sieht vor, dass zwischen den Holzstreifen ein flexibles Flächengebilde, insbesondere eine Lage aus Vlies angeordnet ist. Das flexible Flächengebilde wird zwischen die sich kreuzenden Holzstreifen eingegliedert und mit diesen gemeinsam vernäht. Auf diese Weise ist der Zwischenraum zwischen den Holzstreifen durch das Vlies bedeckt. Hierdurch können Jungtriebe von Baumsetzlingen o.ä. gegen Verbiss- und Fegeschäden geschützt werden.

Das textile Flächengebilde, insbesondere das Vlies, ist lichtdurchlässig. Des Weiteren besteht das Flächengebilde aus einem biokompatiblen und/oder biologisch abbaubaren Werkstoff, insbesondere aus einem nachwachsenden Rohstoff.

Eine weitere Ausführungsform sieht vor, dass auf oder unter den Holzstreifen ein flexibles Flächengebilde, vorzugsweise ein biologisch abbaubares Vlies angeordnet ist, das über den zumindest einen Faden insbesondere über mehrere Fäden mit den Holzstreifen verbunden ist. Das flexible Flächengebilde ist mit den Holzstreifen vernäht.

Weiterhin können die Holzstreifen über ein Fixierband, beispielsweise ein Klebeband, Gewebeband, Textilband oder Holzband verbunden sein. Die einzelnen Holzstreifen können parallel nebeneinander mit Abstand angeordnet sein oder sich kreuzen. Ein oder mehrere Fixierbänder sind quer über jeweils mehrere Holzstreifen verlaufend mit diesen verbunden. Auf diese Weise kann eine Vorfixierung oder eine zusätzliche Fixierung geschaffen werden. Die Holzstreifen sind durch eine aus zumindest einem Faden gebildete Nähverbindung verbunden. Die Nähverbindung kann sich in Längsrichtung über ein Fixierband erstrecken. Zumindest an den Kreuzungspunkten sind die Holzstreifen über eine genähte Verbindung fixiert. Die Holzstreifen sind durch eine aus zumindest einem Faden gebildeten Naht miteinander verbunden. Weiterhin sind die Holzstreifen und das Fixierband durch eine aus einem Faden gebildete Naht miteinander verbunden. Hierbei ist der zumindest eine Faden durch das Fixierband und einen Holzstreifen gestochen.

Die Fügung mittels der Fadenverbindung zwischen den Holzstreifen in Kreuzungsbereichen ist fest, jedoch begrenzt gelenkig. Die durch den bzw. die Fäden gebildete Schlingenkette ermöglicht eine elastische Verbindung der Holzstreifen in den Kreuzungsbereichen. Auf diese Weise sind mehrere Holzstreifen ziehharmonikaartig zusammengefügt. Die nähtechnisch mittels einer Fadenverbindung gefügten Kreuzungsbereiche bilden Scherengelenke, die eine flexible und begrenzte Zusammenschiebbarkeit und Auseinanderziehbarkeit eines Flächenelements ermöglichen. Dies ist vorteilhaft für den Transport und/oder die Lagerung der Flächenelemente ebenso wie für den Einsatz der Flächenelemente und der Herstellung von dreidimensionalen Strukturen aus den Flächenelementen, beispielsweise hüllenartige Strukturen von Wuchs- bzw. Schutzhüllen bzw. Verbissschutzvorrichtungen.

Insbesondere ist ein erfindungsgemäßes Flächenelement für Anwendungen im Außenbereich vorgesehen, insbesondere in der Forst- und Landwirtschaft und im Naturschutz.

Für die Praxis ist insbesondere vorgesehen, dass ein Flächenelement als Pflanzenschutzvorrichtung zum Einsatz gelangt und/oder dass eine Pflanzenschutzvorrichtung ein erfindungsgemäßes Flächenelement aufweist bzw. aus zumindest einem solchen Flächenelement gebildet ist.

Die Erfindung ist nachfolgend anhand eines in den Zeichnungen dargestellten Ausführungsbeispiels näher beschrieben. Es zeigen:
- Figur 1: technisch schematisiert ein erfindungsgemäßes Flächenelement in einer Ansicht auf die Vorderseite;
- Figur 2: das Flächenelement in einer rückseitigen Ansicht;
- Figur 3: einen Ausschnitt aus der Vorderansicht des Flächenelements;
- Figur 4: einen Ausschnitt aus der Ansicht auf die Rückseite eines Flächenelements und
- Figur 5: technisch schematisiert eine Ansicht auf eine weitere Ausführungsform eines erfindungsgemäßen Flächenelements.

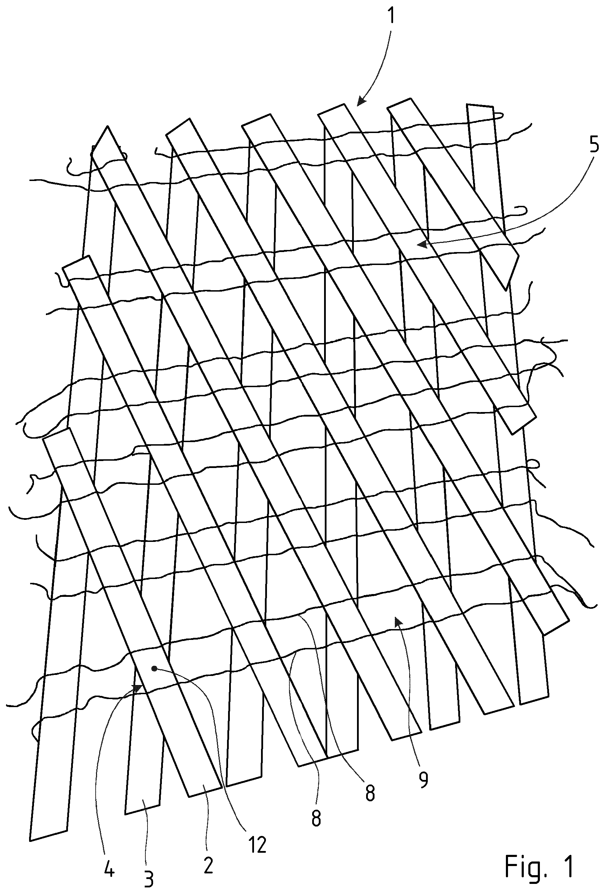

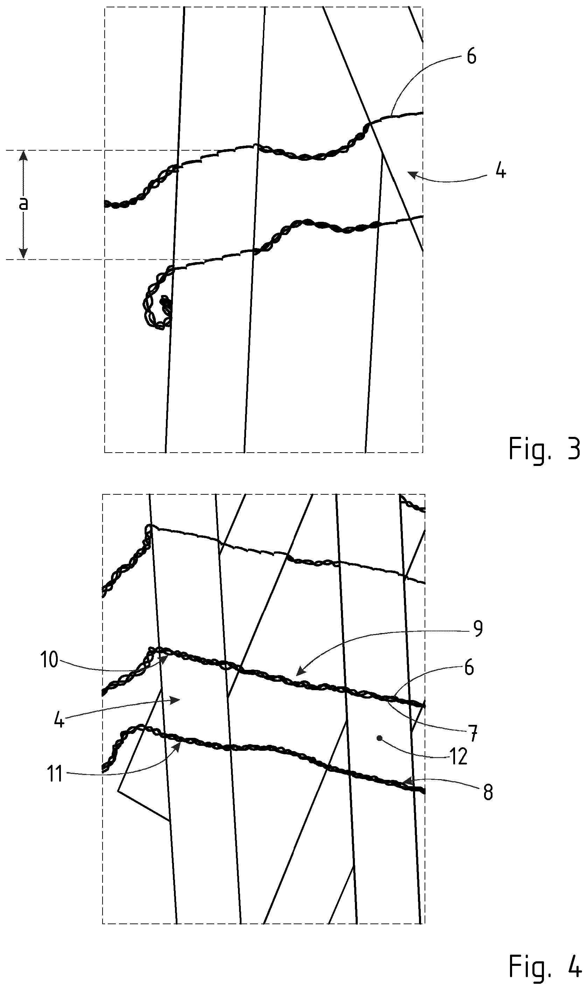

Anhand der Figuren 1 bis 4 ist eine erste Ausführungsform eines erfindungsgemäßen Flächenelements 1 erläutert.

Die Figur 1 zeigt eine Ansicht auf die Vorderseite eines Flächenelements 1.

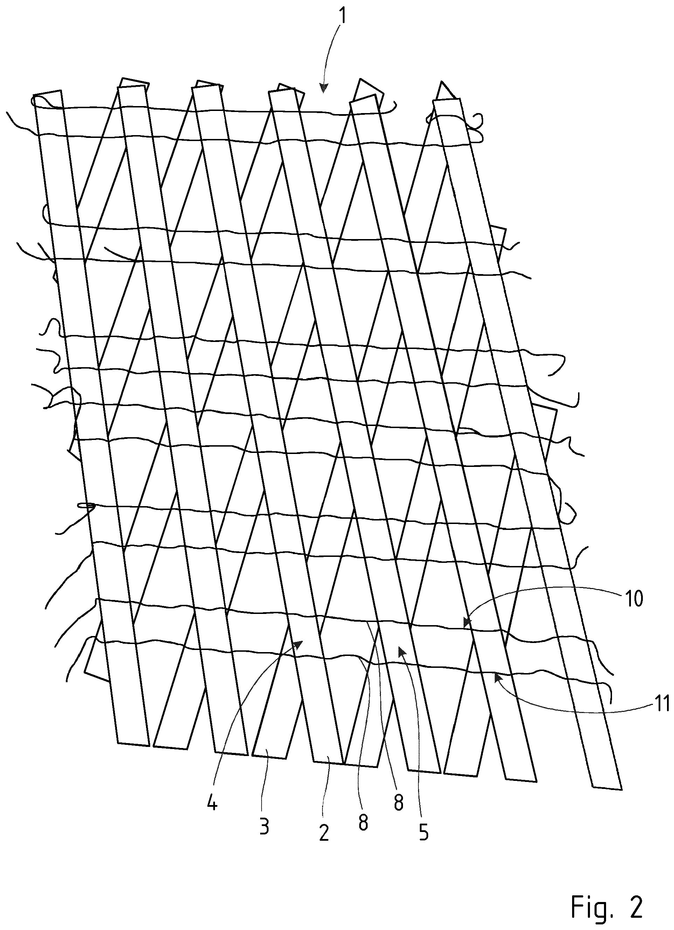

Figur 2 zeigt die Rückseite des Flächenelements 1,

Das Flächenelement 1 besteht aus sich kreuzenden Holzstreifen 2, 3. Die Anordnung der Holzstreifen 2, 3 ist scherengitterartig bzw. ziehharmonikaartig, wobei sich die Holzstreifen 2, 3 in Kreuzungsbreichen 4, 5 kreuzen. Die Anzahl der Holzstreifen 2, 3 ebenso die Dicke der Holzstreifen 2, 3 und die Länge der einzelnen Holzstreifen 2, 3 erfolgt in Anpassung an die vorgesehene Verwendung des Flächenelements 1. Die Anordnung und deren geometrische Auslegung ist so gewählt, dass ein Flächengebilde bzw. flächiges Flächenelement 1 entsteht. Ein Flächenelement 1 kann für den praktischen Einsatz zu einer bogenförmigen, halbrunden oder rohrförmigen bzw. hüllenartigen Struktur geformt werden.

Die Holzstreifen 2, 3 sind durch eine aus zwei Fäden 6, 7 gebildete Nähverbindung miteinander verbunden.

Zumindest einer der Fäden 6, 7 ist quer durch die Holzstreifen 2, 3 gestochen, wobei der Faden 6, 7 mehrfach wiederholt durch die Holzstreifen 2, 3 geführt und die Fäden 6, 7 mit sich und mit den Holzstreifen 2, 3 verschlungen sind. Nähtechnisch werden die Fäden 6, 7 zu einer Schlingenkette 8 verschlungen. Eine Schlingenkette 8 erstreckt sich jeweils quer über die Breite eines Flächenelements 1. Hierbei verläuft die Schlingenkette 8 über einzelne Holzstreifen 2, 3 sowie über einen Freiraum 9 zwischen zwei Holzstreifen 2, 3 und insbesondere erstreckt sich die Schlingenkette 8 über Kreuzungsbereiche 4, 5 von zwei Holzstreifen 2, 3.

Die Holzstreifen 2, 3 sind mit Hilfe einer Nadel und der Fäden 6, 7 miteinander verbunden. Mittels der Nadel werden Durchgangslöcher quer in den Holzstreifen 2, 3 gestochen und zumindest einer der beiden Fäden 6 eingezogen und jeweils durch ein Durchgangsloch geführt. Die Fäden 6, 7 sind hierbei wiederholt durch die Holzstreifen 2, 3 gestochen, wobei die Fäden 6, 7 auf der Rückseite des Flächenelements 1 mit sich verschlungen sind. Der Faden 6, der den Oberfaden der Nähverbindung bildet, ist durch die Holstreifen 2, 3 geführt und durch die nächste Stichstelle wieder nach oben zur Vorderseite geführt. Auf diese Weise ist der Faden 6 mit den beiden Holzstreifen 2, 3 verschlungen. Die Fäden 6, 7 bilden einen Kettenstich.

Eine aus den Fäden 6, 7 gebildete Schlingenkette 8 erstreckt sich über mehrere Holzstreifen 2, 3 und entsprechende Kreuzungsbereich 4, 5 sowie über einen Freiraum 9 zwischen zwei Kreuzungsbereichen 4, 5.

Über die Höhe eines Flächenelements 1 sind mehrere Reihen 10, 11 von Schlingenketten 8 vorgesehen. Die Schlingenketten 8 sind mit einem Abstand a zueinander angeordnet. Eine erste Reihe 10 einer Schlingenkette 8 verläuft bezogen auf einen Kreuzungsbereich 4, 5 unterhalb des Kreuzungsmittelpunktes 12. Eine zweite Reihe 11 einer Schlingenkette 8 verläuft bezogen auf den Kreuzungsmittelpunkt 12 oberhalb über dem Kreuzungsbereich 4, 5.

Die Holzstreifen 2,3 sind ziehharmonikaartig zusammengefügt.

Die Holzstreifen 2, 3 bestehen aus einem 0,5 mm bis 10 mm dickem Furnier aus Echtholz.

Die Fäden 6, 7 bestehen aus einem biokompatiblen bzw. biologisch abbaubaren Werkstoff, insbesondere aus einem nachwachsenden Rohstoff. Vorzugsweise sind die Fäden 6, 7 aus Naturfasern hergestellt, besonders bevorzugt aus Pflanzenfasern wie Baumwolle.

In den Zeichnungen nicht dargestellt ist eine Ausführungsform eines Flächenelements, bei dem zwischen den einzelnen Holzstreifen 2, 3 ein flächiges flexibles Flächengebilde eingegliedert ist, insbesondere aus Vlies. Auch das Flächengebilde besteht vorzugsweise aus einem biokompatiblen und/oder biologisch abbaubaren Werkstoff, insbesondere aus einem nachwachsendem Rohstoff.

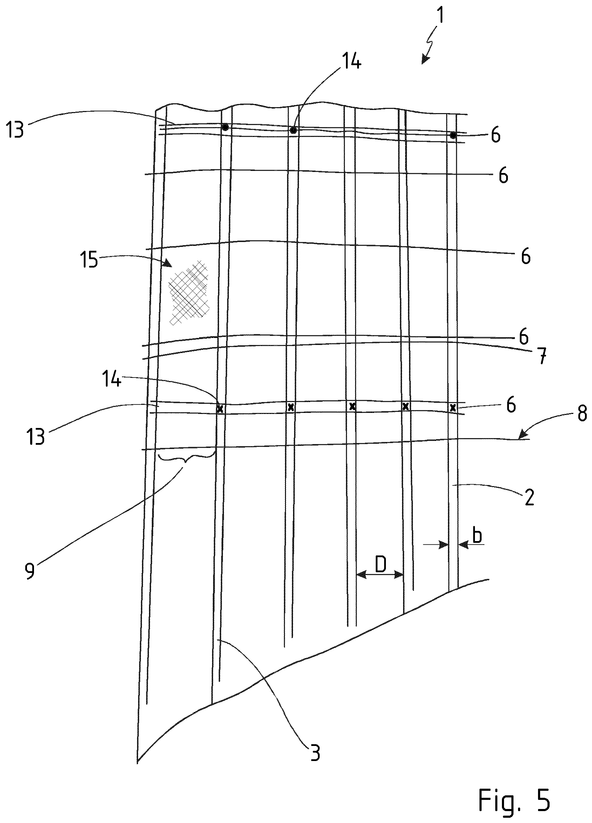

Die Figur 5 zeigt eine weitere Ausführungsform eines Flächenelements 1. Das Flächenelement 1 ist aus miteinander verbundenen Holzstreifen 2, 3 gebildet. Die Holzstreifen 2, 3 sind durch zumindest einen Faden 6, 7 miteinander gefügt, wobei der Faden 6, 7 durch die Holzstreifen 2, 3 gestochen ist. Dies erfolgt mehrfach wiederholt, so dass der Faden 6, 7 mit sich und/oder mit den Holzstreifen 2, 3 verschlungen ist.

Einzelne Holzstreifen 2, 3 weisen eine Breite b auf. Die Breite b der Holzstreifen 2, 3 eines Flächenelements 1 kann bei allen Holzstreifen 2, 3 gleich sein. Die Breite b der Holzstreifen 2, 3 kann auch variieren.

Die Holzstreifen 2, 3 sind in einem definierten Abstand D parallel zueinander angeordnet. Die Holzstreifen 2, 3 kreuzen sich nicht. Ein aus einem Faden 6 oder einem Faden 7 gebildete Naht erstreckt sich quer über eine Anzahl von Holzstreifen 2, 3. Auch eine aus einem Faden 6 und einem Faden 7 gebildete Schlingenkette 8 kann sich quer über eine Anzahl von Holzstreifen 2, 3 erstrecken. Die Naht aus einem Faden 6, 7 oder die Schlingenkette 8 verläuft über einen Freiraum 9 zwischen zwei Holzstreifen 2, 3, wobei der Freiraum 9 im Wesentlichen dem Abstand D zwischen zwei Holzstreifen 2, 3 entspricht.

Weiterhin ist vorgesehen, dass ein Fixierband 13 oder mehrere Fixierbänder 13 quer über eine Anzahl von nebeneinander angeordneten Holzstreifen 2, 3 angeordnet ist. Das Fixierband 13 kann ein Gewebe-, Textil- oder Holzband sein. In Kreuzungsstellen 14 ist ein Fixierband 13 mit den Holzstreifen 2, 3 gefügt. Die Fügung ist eine Nähverbindung und durch zumindest einen Faden 6, 7 gebildet, der durch einen Holzstreifen 2, 3 und ein Fixierband 13 gestochen ist.

Die aus einem Faden 6, 7 gebildete Nähverbindung kann sich quer über die Holzstreifen 2, 3 und in Längsrichtung über das Fixierband 13 erstrecken.

Zumindest in Kreuzungsstellen 14 zwischen dem Fixierband 13 und den Holzstreifen 2, 3 ist das Fixierband 13 über eine genähte Verbindung an den Holzstreifen 2, 3 fixiert.

In der Figur 5 andeutungsweise dargestellt ist ein flexibles Flächengebilde 15. Dieses ist auf oder unter den Holzstreifen 2, 3 angeordnet und mit diesen durch zumindest einen Faden 6, 7 vernäht. Das Flächengebilde 15 erstreckt sich über die Fläche des Flächenelements 1.

Ein erfindungsgemäßes Flächenelement 1 dient insbesondere zur Bildung einer Pflanzenschutzvorrichtung. Das Flächenelement 1 bildet in der Pflanzenschutzvorrichtung eine hüllenartige Struktur, insbesondere in zylindrischer Form, welche eine Pflanze umschließt.

### Bezugszeichen:

- 1 -: Flächenelement
- 2 -: Holzstreifen
- 3 -: Holzstreifen
- 4 -: Kreuzungsbereich
- 5 -: Kreuzungsbereich
- 6 -: Faden
- 7 -: Faden
- 8 -: Schlingenkette
- 9 -: Freiraum
- 10 -: Reihe von 8
- 11 -: Reihe von 8
- 12 -: Kreuzungsmittelpunkt
- 13 -: Fixierband
- 14 -: Kreuzungsstelle von 2, 3 und 13
- 15 -: Flächengebilde

- a -: Abstand
- b -: Breite von 2, 3
- D -: Abstand zwischen 2, 3

## Patentansprüche

1. Flächenelement (1) gebildet aus miteinander verbundenen Holzstreifen (2, 3), wobei die Holzstreifen (2, 3) durch zumindest einen Faden (6, 7) verbunden sind, **dadurch gekennzeichnet, dass** der Faden (6, 7) durch die Holzstreifen (2, 3) gestochen ist und der Faden (6, 7) mehrfach wiederholt durch die Holzstreifen (2, 3) geführt und der Faden (6, 7) mit sich und/oder mit den Holzstreifen (2, 3) verschlungen ist.

2. Flächenelement (1) nach Anspruch 1, **dadurch gekennzeichnet, dass** zumindest zwei Holzstreifen (2, 3) sich kreuzend angeordnet sind.

3. Flächenelement (1) nach Anspruch 2, **dadurch gekennzeichnet, dass** der zumindest eine Faden (6, 7) in einem Kreuzungsbereich (4, 5) von zwei Holzstreifen (2, 3) quer durch die Dicke der beiden Holzstreifen (2, 3) gestochen ist.

4. Flächenelement (1) nach einem der Ansprüche 1 bis 3, **dadurch gekennzeichnet, dass** sich eine aus dem einen Faden (6) oder aus mehreren Fäden (6, 7) gebildete Naht über einen Holzstreifen (2, 3) und/oder einen Kreuzungsbereich (4, 5) von zwei Holzstreifen (2, 3) erstreckt.

5. Flächenelement nach einem der Ansprüche 1 bis 4, **dadurch gekennzeichnet, dass** durch den zumindest einen Faden (6, 7) ein Kettenstich gebildet ist.

6. Flächenelement nach einem der Ansprüche 1 bis 5, **dadurch gekennzeichnet, dass** sich eine aus dem zumindest einen Faden (6, 7) gebildete Schlingenkette (8) über zumindest zwei Holzstreifen (2, 3) und einen Freiraum (9) zwischen den zwei Holzstreifen (2, 3) erstreckt.

7. Flächenelement (1) nach Anspruch 6, **dadurch gekennzeichnet, dass** mehrere mit Abstand (a) zueinander angeordnete Reihen (10, 11) von Schlingenketten (8) vorgesehen sind.

8. Flächenelement nach einem der Ansprüche 1 bis 7, **dadurch gekennzeichnet, dass** die Holzstreifen (2, 3) aus 0,5 mm bis 10 mm dickem Furnier bestehen.

9. Flächenelement nach einem der Ansprüche 1 bis 8, **dadurch gekennzeichnet, dass** der Faden (6, 7) aus einem biokompatiblen und/oder biologisch abbaubaren Werkstoff besteht, insbesondere aus einem nachwachsenden Rohstoff, vorzugsweise aus Naturfasern, besonders bevorzugt aus Pflanzenfasern wie Baumwolle, oder aus Regeneratfasern.

10. Flächenelement nach einem der Ansprüche 1 bis 9, **dadurch gekennzeichnet, dass** auf oder unter den Holzstreifen (2, 3) ein flexibles Flächengebilde (15), vorzugsweise ein biologisch abbaubares Vlies angeordnet ist, das über den zumindest einen Faden (6, 7) mit den Holzstreifen (2, 3) vernäht ist.

11. Flächenelement nach einem der Ansprüche 1 bis 10, **dadurch gekennzeichnet, dass** zwischen den Holzstreifen (2, 3) ein flexibles Flächengebilde (15), insbesondere eine Lage aus Vlies, angeordnet ist.

12. Flächenelement nach Anspruch 11, **dadurch gekennzeichnet, dass** das Flächengebilde (15) aus einem biokompatiblen und/oder biologisch abbaubaren Werkstoff besteht, insbesondere aus einem nachwachsenden Rohstoff.

13. Flächenelement nach einem der Ansprüche 1 bis 12, **dadurch gekennzeichnet, dass** mehrere Holzstreifen (2, 3) ziehharmonikaartig zusammengefügt sind.

14. Flächenelement nach einem oder mehreren der vorhergehenden Ansprüche, **dadurch gekennzeichnet, dass** ein Fixierband (13) über mehrere Holzstreifen (2, 3) verläuft und das Fixierband (13) durch zumindest einen Faden (6, 7) mit einem Holzstreifen (2, 3) verbunden ist, wobei der Faden (6, 7) durch das Fixierband (13) und einen Holzstreifen (2, 3) gestochen ist.

15. Pflanzenschutzvorrrichtung gebildet aus oder aufweisend zumindest ein Flächenelement (1) gemäß einem der Ansprüche 1 bis 14.

## Claims

1. A surface element (1), formed from interconnected wooden strips (2, 3), wherein the wooden strips (2, 3) are connected by at least one thread (6, 7), **characterized in that** the thread (6, 7) is pierced through the wooden strips (2, 3) and the thread (6, 7) is repeatedly passed through the wooden strips (2, 3) and the thread (6, 7) is entangled with itself and/or with the wooden strips (2, 3).

2. The surface element (1) according to claim 1, **characterized in that** at least two wooden strips (2, 3) are arranged intersecting each other.

3. The surface element (1) according to claim 2, **characterized in that** the at least one thread (6, 7) in a crossing area (4, 5) of two wooden strips (2, 3) is pierced transversely through the thickness of both wooden strips (2, 3).

4. The surface element (1) according to any one of claims 1 to 3, **characterized in that** a seam, formed from one thread (6) or from several threads (6, 7), extends over a wooden strip (2, 3) and/or a crossing area (4, 5) of two wooden strips (2, 3).

5. The surface element according to any one of claims 1 to 4, **characterized in that** a chain stitch is formed by the at least one thread (6, 7).

6. The surface element according to any one of claims 1 to 5, **characterized in that** a loop chain (8), formed from the at least one thread (6, 7), extends over at least two wooden strips (2, 3) and a free space (9) between the two wooden strips (2, 3).

7. The surface element (1) according to claim 6, **characterized in that** several rows (10, 11) of loop chains (8) arranged at a distance (a) from each other are provided.

8. The surface element according to any one of claims 1 to 7, **characterized in that** the wood strips (2, 3) consist of veneer that is 0.5 mm to 10 mm thick.

9. The surface element according to any one of claims 1 to 8, **characterized in that** the thread (6, 7) consists of a biocompatible and/or biodegradable material, in particular of a renewable raw material, preferably of natural fibers, most preferably of plant fibers such as cotton, or of regenerated fibers.

10. The surface element according to any one of claims 1 to 9, **characterized in that** a flexible surface structure (15), preferably a biodegradable nonwoven fabric, is arranged on or under the wooden strips (2, 3) and is sewn to the wooden strips (2, 3) via at least one thread (6, 7).

11. The surface element according to any one of claims 1 to 10, **characterized in that** a flexible surface structure (15), in particular a layer of nonwoven fabric, is arranged between the wooden strips (2, 3).

12. The surface element according to claim 11, **characterized in that** the surface structure (15) consists of a biocompatible and/or biodegradable material, in particular a renewable raw material.

13. The surface element according to any one of claims 1 to 12, **characterized in that** several wooden strips (2, 3) are joined together in an accordion-like manner.

14. The surface element according to any one or more of the preceding claims, **characterized in that** a fixing band (13) runs over several wooden strips (2, 3) and the fixing band (13) is connected to a wooden strip (2, 3) by at least one thread (6, 7), wherein the thread (6, 7) is pierced through the fixing band (13) and a wooden strip (2, 3).

15. A plant protection device, formed from or having at least one surface element (1) according to any one of claims 1 to 14.

## Revendications

1. Élément de surface (1) formé de bandes de bois (2, 3) reliées entre elles, dans lequel les bandes de bois (2, 3) sont reliées par au moins un fil (6, 7), **caractérisé en ce que** le fil (6, 7) est passé à travers les bandes de bois (2, 3) et **en ce que** le fil (6, 7) est guidé plusieurs fois à travers les bandes de bois (2, 3) et **en ce que** le fil (6, 7) s'emmêle avec lui-même et/ou avec les bandes de bois (2, 3).

2. Élément de surface (1) selon la revendication 1, **caractérisé en ce qu'**au moins deux bandes de bois (2, 3) sont disposées de manière à se croiser.

3. Élément de surface (1) selon la revendication 2, **caractérisé en ce que** l'au moins un fil (6, 7) est passé dans une zone de croisement (4, 5) de deux bandes de bois (2, 3) transversalement à travers l'épaisseur des deux bandes de bois (2, 3).

4. Élément de surface (1) selon l'une quelconque des revendications 1 à 3, **caractérisé en ce qu'**une couture formée d'un fil (6) ou de plusieurs fils (6, 7) s'étend sur une bande de bois (2, 3) et/ou une zone de croisement (4, 5) de deux bandes de bois (2, 3).

5. Élément de surface selon l'une quelconque des revendications 1 à 4, **caractérisé en ce qu'**un point de chaîne est formé par l'au moins un fil (6, 7).

6. Élément de surface selon l'une quelconque des revendications 1 à 5, **caractérisé en ce qu'**une chaîne de boucles (8) formée de l'au moins un fil (6, 7) s'étend sur au moins deux bandes de bois (2, 3) et un espace libre (9) entre les deux bandes de bois (2, 3).

7. Élément de surface (1) selon la revendication 6, **caractérisé en ce que** plusieurs rangées (10, 11) de chaînes de boucles (8) disposées à distance (a) les unes par rapport aux autres sont prévues.

8. Élément de surface selon l'une quelconque des revendications 1 à 7, **caractérisé en ce que** les bandes de bois (2, 3) sont constituées d'un placage de 0,5 mm à 10 mm d'épaisseur.

9. Élément de surface selon l'une quelconque des revendications 1 à 8, **caractérisé en ce que** le fil (6, 7) est constitué d'un matériau biocompatible et/ou biodégradable, en particulier d'une matière première renouvelable, de préférence de fibres naturelles, de manière particulièrement préférée de fibres végétales telles que le coton, ou de fibres régénérées.

10. Élément de surface selon l'une quelconque des revendications 1 à 9, **caractérisé en ce qu'**est disposée, sur ou sous les bandes de bois (2, 3), une structure de surface flexible (15), de préférence un non-tissé biodégradable, qui est cousue aux bandes de bois (2, 3) par l'intermédiaire de l'au moins un fil (6, 7).

11. Élément de surface selon l'une quelconque des revendications 1 à 10, **caractérisé en ce qu'**une structure de surface flexible (15), en particulier une couche en non-tissé, est disposée entre les bandes de bois (2, 3).

12. Élément de surface selon la revendication 11, **caractérisé en ce que** la structure de surface (15) est constituée d'un matériau biocompatible et/ou biodégradable, en particulier d'une matière première renouvelable.

13. Élément de surface selon l'une quelconque des revendications 1 à 12, **caractérisé en ce que** plusieurs bandes de bois (2, 3) sont assemblées en accordéon.

14. Élément de surface selon une ou plusieurs des revendications précédentes, **caractérisé en ce qu'**une bande de fixation (13) s'étend sur plusieurs bandes de bois (2, 3) et la bande de fixation (13) est reliée par au moins un fil (6, 7) à une bande de bois (2, 3), dans lequel le fil (6, 7) est passé à travers la bande de fixation (13) et une bande de bois (2, 3).

15. Dispositif de protection de plantes formé de ou présentant au moins un élément de surface (1) selon l'une quelconque des revendications 1 à 14.
